(19) Europäisches Patentamt
European Patent Office
Office européen des brevets

(11) **EP 2 781 905 B1**

(12) **EUROPÄISCHE PATENTSCHRIFT**

(45) Veröffentlichungstag und Bekanntmachung des Hinweises auf die Patenterteilung:
**22.05.2019 Patentblatt 2019/21**

(51) Int Cl.:
*G01N 15/08* *(2006.01)*     *G01N 7/10* *(2006.01)*

(21) Anmeldenummer: **14152470.2**

(22) Anmeldetag: **24.01.2014**

(54) **Verfahren und vorrichtung zur bestimmung der permeationsrate von barrierematerialien**

Method and device for determining the permeation rate of barrier materials

Procédé et dispositif de détermination du taux de perméation de matériaux barrières

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.02.2013 DE 102013002724**

(43) Veröffentlichungstag der Anmeldung:
**24.09.2014 Patentblatt 2014/39**

(73) Patentinhaber: **Fraunhofer-Gesellschaft zur Förderung der angewandten Forschung e.V.
80686 München (DE)**

(72) Erfinder:
• **Grählert, Wulf
01277 Dresden (DE)**
• **Beese, Harald
01728 Bannewitz (DE)**

(74) Vertreter: **Pfenning, Meinig & Partner mbB Patent- und Rechtsanwälte
An der Frauenkirche 20
01067 Dresden (DE)**

(56) Entgegenhaltungen:
**DE-A1-102007 026 073     US-B1- 6 964 191**

• **GIBSON P ET AL: "Measurement of water vapor diffusion through polymer films and fabric/membrane laminates using a diode laser spectroscope", POLYMER-PLASTICS TECHNOLOGY AND ENGINEERING, TAYLOR & FRANCIS INC, US, Bd. 38, Nr. 2, 1. Januar 1999 (1999-01-01) , Seiten 221-239, XP009111729, ISSN: 0360-2559**

EP 2 781 905 B1

**Beschreibung**

Die Erfindung betrifft ein Verfahren zur Bestimmung der Permeationsrate von Barrierematerialien.

Zur Verringerung des Gasaustauschs zwischen Medien oder Gegenständen mit ihrer Umgebung, finden Barrierematerialien mit unterschiedlichen Permeationsraten einen immer größeren Anwendungsbereich, beispielswiese für die Verpackung von Lebensmitteln oder Medikamenten oder für die Verkapselung von elektronischen Bauelementen. Insbesondere für die organische Elektronik, beispielsweise für organische LEDs, organische Photovoltaik oder Vakuumisolationspaneele (VIP) werden Barrierematerialien mit geringsten Permeationsraten gefordert, da die Qualität und Lebensdauer dieser Bauteile vom Feuchtigkeitsschutz abhängt. In Folge der Entwicklung von Barrierematerialien mit geringsten Permeationsraten, werden Messverfahren gefordert mit denen Permeationsraten im Bereich von $10^{-5}$ bis $10^{-6}$ g m$^{-2}$ d$^{-1}$ zuverlässig und einfach bestimmt werden können.

Zu diesem Zweck existiert bereits eine Reihe von Messsystemen mit einer Vielzahl stoffspezifischer und stoffunspezifischer Sensoren. So sind beispielsweise Messmethoden bekannt, bei denen ein Prüfgas aus einer ersten Kammer durch ein Barrierematerial in eine zweite geschlossene Kammer permeiert und dabei der Anstieg der Permeatenkonzentration in der Gasphase der geschlossenen Kammer über eine bestimmte Zeit gemessen wird. Diese Methode ist jedoch aufgrund unterschiedlicher Einflüsse fehlerbehaftet. Beispielsweise ist der zeitliche Anstieg der Permeatenkonzentration weder konstant noch proportional zur Permeationsrate. Zu solchen Fehlern kommt es insbesondere bei sehr geringen zu bestimmenden Permeatenkonzentrationen, da die Moleküle des Permeaten innerhalb der geschlossenen Kammern mit den Festkörperoberflächen wechselwirken. Gerade bei der Bestimmung sehr geringer Permeatenkonzentrationen führt eine Nichtberücksichtigung dieser Effekte zwangsläufig zu stark fehlerbehafteten Messergebnissen. Daher werden Messmethoden gefordert, mit denen insbesondere kondensierbare Gase unbeeinflusst von deren Adsorption- und Desorptionseigenschaften bestimmt werden können.

Bei dem bereits bekannten Lyssy-Verfahren misst ein Feuchtesensor den Anstieg der relativen Feuchte von beispielsweise 9,9% auf 10,1% in einer geschlossenen Messkammer. Anschließend wird die Messkammer bis zu einer unteren Grenze des Messbereichs ausgespült und eine bestimmte Anzahl von Untertrocknungszyklen zur Konditionierung der Messzelle durchgeführt, bevor ein neuer Messzyklus gestartet wird. Stimmen dabei die Anstiege mehrerer Messzyklen überein, kann von einem stationären Zustand ausgegangen und die Permeationsrate durch das Barriereelement bestimmt werden. Der Messbereich der Wasserdampfdurchlässigkeit liegt jedoch in einem Bereich zwischen 0,03 - 10000 g m$^{-2}$ d$^{-1}$ und ist damit um mehrere Größenordnungen zu hoch, um geringste Permeationsraten bestimmen zu können.

Andere Messmethoden, wie beispielsweise der Calciumspiegeltest oder radiometrische Verfahren, benötigen eine aufwendige Probenpräparation und prinzipbedingt lange Messzeiten.

Eine hochempfindliche und gleichzeitig einfache und robuste Messtechnologie zur Bestimmung der Permeationsrate, beispielsweise von Wasserdampf im Bereich < $10^{-4}$ g m$^{-2}$ d$^{-1}$ ist nicht bekannt.

Eine Vorrichtung und ein Verfahren zur Bestimmung der Permetaionsrate mindestens eines Permeaten, durch ein eine Diffusionssperre bildendes Elements sind aus DE 10 2007 026 073 A1 bekannt.

Die US 6,964,191 B1 betrifft Möglichkeiten zur Bestimmung der Permeation und Permeatsorption. Dabei können Verpackungen oder Behälter innerhalb einer abgeschlossenen Kammer untersucht werden. Mit einem Sensor wird die Permeatkonzentration in der Kammer nach Permeation aus einer Verpackung oder einem Behälter bestimmt. Dabei erfolgt eine Bestimmung der Zeit bis zum Erreichen eines vorgegebenen Grenzwertes.

Es ist daher Aufgabe der Erfindung, ein alternatives und einfaches Verfahren zur Bestimmung der Permeationsrate von Barrierematerialien bereitzustellen, dessen Messfehler insbesondere bei der Bestimmung besonders kleiner Permeationsraten gering gehalten werden kann.

Die Aufgabe wird erfindungsgemäß mit einem Verfahren nach dem Anspruch 1 gelöst. Weiterbildungen des erfindungsgemäßen Verfahrens können mit in untergeordneten Ansprüchen bezeichneten Merkmalen realisiert werden.

Bei dem erfindungsgemäßen Verfahren zur Bestimmung der Permeationsrate von Barrierematerialien, wird in einer Messkammer, die mindestens zwei Absperrelemente zum Öffnen und Schließen aufweist, eine Konzentration mindestens eines Permeaten bestimmt, der als Prüfgas in einer Prüfgaskammer mit konstanter Konzentration vorliegend, durch ein zwischen der Prüfgaskammer und der Messkammer angeordnetes Barriereelement, das eine bekannte permeierbare Fläche (A) aufweist, in die Messkammer permeiert. Dabei wird die Messkammer in einem Verfahrensschritt (i) in einer ersten Messvariante ab Erreichen einer vorgebbaren oberen Umschaltkonzentration (cvA) oder in einer zweiten Messvariante ab Erreichen einer vorgebbaren Anreicherungszeit (tvA), durch Öffnen der Absperrelemente mit einem konstanten permeatfreien Spülgasvolumenstrom ($\dot{V}$) gespült, wobei die Permeatenkonzentration (c) in der offenen Messkammer in Folge des Spülens sinkt. Dabei wird der Verlauf der sinkenden Permeatenkonzentration (c) in der ersten Messvariante bis zum Erreichen einer vorgebbaren unteren Umschaltkonzentration (cvS) bestimmt, wobei außerdem die Spülzeit (tS) bestimmt wird. Bei der zweiten Messvariante wird der Verlauf der sinkenden Permeatenkonzentration (c) bis zum Erreichen einer vorgebbaren Spülzeit (tvS) bestimmt.

Weiterhin wird die Messkammer in einem Verfahrensschritt (ii), in der ersten Messvariante bei Erreichen der vorgebbaren unteren Umschaltkonzentration (cvS) oder in der zweiten Messvariante bei Erreichen der vorgebbaren Spülzeit (tvS), durch Schließen der Absperrelemente geschlossen, wobei die Permeatenkonzentration in der geschlossenen Messkammer in Folge der Permeation steigt. Dabei wird in der ersten Messvariante eine Anreicherungszeit (tA) bis zum Erreichen der vorgebbaren oberen Umschaltkonzentration (cvA) bestimmt. Anschließend wird in der ersten Messvariante mit der im Verfahrensschritt (i) bestimmten Spülzeit (tS) und mit dem während der Spülzeit (tS) bestimmten Verlauf der Permeatenkonzentration (c) und der im Verfahrensschritt (ii) bestimmten Anreicherungszeit (tA), oder in der zweiten Messvariante mit dem im Verfahrensschritt (i) während der vorgebbaren Spülzeit (tvS) bestimmten Verlauf der Permeatenkonzentration (c), der vorgebbaren Spülzeit (tvS) und der vorgebbaren Anreicherungszeit (tvA), die Permeationsrate (P) des Barriereelements mit der Gleichung

$$(1) \qquad P = \frac{\int (c(t) \cdot \dot{V}) \ dt \ \cdot \ M \ \cdot \ p}{R \cdot T \cdot t_{total} \cdot A}$$

berechnet, wobei $t_{total}$ für die erste Messvariante die Summe der Spülzeit (tS) und der Anreicherungszeit (tA) und für die zweite Messvariante die Summe der vorgebbaren Spülzeit (tvS) und der vorgebbaren Anreicherungszeit (tvA), M die molare Masse des Permeaten, p der eingehaltene Druck, R die allgemeine Gaskonstante und T die während der Verfahrensschritte (i) und (ii) eingehaltene Temperatur sind.

Als Permeat ist der Anteil des Prüfgases zu verstehen, der während der Permeation aus der Prüfgaskammer, in der eine konstante Konzentration des Prüfgases vorhanden ist, durch das Barriereelement in die Messkammer gelangt. Dabei stellen die vorgebbare obere und untere Umschaltkonzentration die jeweils in der Messkammer maximal bzw. minimal erreichbare Konzentrationen des Permeaten dar.

Unter der Spülzeit (tS) ist die Zeitdauer zu verstehen, die bei dem einstellbaren Spülgasvolumenstrom ($\dot{V}$) benötigt wird, um die Permeatenkonzentration (c) in der Messkammer, ausgehend von der vorgebbaren oberen Umschaltkonzentration (cvA), bis auf die vorgebbare untere Umschaltkonzentration (cvS) zu verringern. Die Anreicherungszeit (tA) ist die Zeitdauer, die bei geschlossener Messkammer notwendig ist, bis, ausgehend von der vorgebbaren unteren Umschaltkonzentration (cvS), die Permeatenkonzentration (c) in der Messkammer den Wert der vorgebbaren oberen Umschaltkonzentration (cvA) in Folge der Permeation durch das Barriereelement erreicht. Das bedeutet, dass das Öffnen der Absperrelemente bei der vorgebbaren oberen Umschaltkonzentration (cvA) und das Schließen der Absperrelemente bei der vorgebbaren unteren Umschaltkonzentration (cvS) durchgeführt wird.

Alternativ ist es mit der zweiten Messvariante vorgesehen, dass die Messkammer im Verfahrensschritt (i) zeitlich beschränkt für eine vorgebbare Spülzeit (tvS) mit dem permeatfreien Spülgasvolumenstrom ($\dot{V}$) gespült wird und im Verfahrensschritt (ii) für eine vorgebbare Anreicherungszeit (tvA) geschlossen bleibt. Dabei stellt sich bei der zweiten Messvariante am Ende der vorgebbaren Anreicherungszeit (tvA) ein oberer Umschaltkonzentrationswert (cA) und am Ende der vorgebbaren Spülzeit (tvS) ein unterer Umschaltkonzentrationswert (cS) ein.

Während in der ersten Messvariante die obere und die untere Umschaltkonzentration (cvA, cvS) vorgegeben werden, werden in der zweiten Messvariante die Spülzeit (tvS) und die Anreicherungszeit (tvA) vorgegeben.

Um auch die während der Spülzeit (tS) bzw. der vorgebbaren Spülzeit (tvS) in die Messkammer permeierende Menge des Permeaten zu berücksichtigen, wird in der Gleichung (1) zur Berechnung der Permeationsrate (P) nicht nur die Anreicherungszeit (tA) bzw. die vorgebbare Anreicherungszeit (tvA) sondern auch die Spülzeit (tS) bzw. die vorgebbaren Spülzeit (tvS) berücksichtigt.

Vorteilhafterweise kann das Verfahren mit dem Verfahrensschritt (i) oder mit dem Verfahrensschritt (ii) beginnend durchgeführt werden. Ein Wechsel von dem Verfahrensschritt (i) zu dem Verfahrensschritt (ii) und umgekehrt kann nach Erreichen der vorgebbaren unteren Umschaltkonzentration (cvS) bzw. der vorgebbaren oberen Umschaltkonzentration (cvA) oder nach Erreichen der vorgegebenen Spülzeit (tvS) bzw. der vorgegebenen Anreicherungszeit (tvA) durchgeführt werden.

Die Permeationsrate (P) kann jeweils aus mindestens einem, jeweils aus mindestens einem Verfahrensschritt (i) und mindestens einem Verfahrensschritt (ii) bestehenden Messzyklus bestimmt werden. Der Messzyklus kann folglich auch aus mehreren Verfahrensschritten (i) und (ii) gebildet werden.

In der geschlossenen Messkammer, d.h. die Absperrelemente sind geschlossen und der Spülgasvolumenstrom ($\dot{V}$) ist unterbrochen, steigt die Permeatenkonzentration in Folge der Permeation durch das Barriereelement an. Ein Anteil des Permeats adsorbiert an den inneren Festkörperoberflächen der Messkammer und ein weiterer Anteil verbleibt in der Gasphase. Dabei kann sich in der geschlossenen Messkammer ein Gleichgewichtszustand zwischen der Permeatenadsorption- und -desorption einstellen. Aufgrund dieses nahezu vorhandenen Gleichgewichtszustands folgt die Zunahme der Konzentration des adsorbierenden Permeaten und der Konzentrationsanstieg des Permeaten in der Gasphase einer sogenannten Systemisotherme, die als für jede Untersuchungsprobe, d.h. für jedes Barriereelement, für jede Vorrichtung und/oder für jedes Prüfgas spezifische Isothermen-Kennlinie verstanden werden kann, bei der jedem Konzentrationswert des adsorbierten Permeaten, ein Konzentrationswert des Permeaten in der Gasphase zuordenbar ist. Als Gleichgewichtszustand (GGW) kann demnach ein Zustand verstanden werden, der erreicht ist, wenn ein Permeatenkonzentrationsanstieg in der Messkammer entlang der Isothermen-Kennlinie verläuft.

Als stationärer Zustand kann der Zustand verstanden werden, der erreicht ist, wenn sich eine konstante Permeationsrate durch das Barriereelement eingestellt hat. Dabei sollte gewährleistet sein, dass in der Prüfgaskammer eine konstante Konzentration des Prüfgases vorhanden ist.

Aufgrund des Spülgasvolumenstroms ($\dot{V}$), der während der Spülzeit (tS) oder der vorgebbaren Spülzeit (tvS) im Verfahrensschritt (i) durch die Messkammer strömt, sinkt die Permeatenkonzentration der Gasphase der Messkammer zunächst schneller ab, als die Konzentration des an den Festkörperoberflächen adsorbierten Permeaten, wodurch der GGW in der Messkammer aufgehoben wird. Dabei folgt die Permeatenkonzentration, d.h. der adsorbierte Anteil und der Anteil in der Gasphase, einer transienten Isothermen-Kennlinie, deren Verlauf von ihrem Startpunkt auf der Systemisothermen-Kennlinie, d.h. beispielsweise ausgehend von der vorgebbaren oberen Umschaltkonzentration (cvA) sowie von dem Spülgasvolumenstrom ($\dot{V}$) abhängt.

Die im Verfahrensschritt (ii) durch das Schließen der Absperrelemente hervorgerufene Unterbrechung des Spülgasvolumenstroms ($\dot{V}$) bewirkt einen Anstieg der Permeatenkonzentration in der Gasphase in Folge der Permeation durch das Barriereelement. Die Permeatenkonzentration der Gasphase steigt kontinuierlich an. Bis zum Erreichen eines Schnittpunkts mit der Isothermen-Kennlinie reduziert sich aufgrund von Desorptionsprozessen auch leicht der Anteil des adsorbierten Gases. Ist der Schnittpunkt mit der Isothermen-Kennlinie erreicht, steigt die Permeatenkonzentration entlang der Isothermen-Kennlinie an. Dies bedeutet, dass der GGW nahezu wiederhergestellt ist.

Die Permeationsrate sollte vorzugsweise erst dann bestimmt werden, wenn sich der stationäre Zustand eingestellt hat. Dies ist der Fall, wenn sich in der Barriere bzw. in einer als Barriere ausgebildeten Folie ein stabiler Konzentrationsgradient des Permeaten ausgebildet hat, d.h. die Feuchte ist durchgebrochen und die Permeationsrate ist konstant. Aufgrund der geringen Konzentrationsänderung in der Messkammer, die nur wenige ppm beträgt, bleibt die Konzentrationsdifferenz zur Prüfgasseite nahezu unbeeinflusst.

Unmittelbar vor der Durchführung des eigentlichen ersten Messzyklus sollte zumindest einmal ein Spül- und Anreicherungsschritt durchgeführt worden sein, so dass vom Vorliegen des Gleichgewichtszustand (GGW) ausgegangen werden kann.

Erst dann, wenn der stationäre Zustand zumindest näherungsweise erreicht ist, kann die Permeationsrate sicher bestimmt werden.

Zur Überprüfung des Vorliegens des stationären Zustands mit der ersten Messvariante kann der Messzyklus auch so oft wiederholt werden, bis die sich aus der Summe der Anreicherungszeit (tA) und der Spülzeit (tS) ergebende Gesamtzykluszeit mit der des zeitlich unmittelbar davorliegenden Messzyklus übereinstimmt oder um maximal die doppelte Messunsicherheit abweicht.

Das Vorliegen des stationären Zustands kann mit der zweiten Messvariante dadurch überprüft werden, indem der Messzyklus so oft wiederholt wird, bis der untere Umschaltkonzentrationswert (cS) mit dem des zeitlich unmittelbar davorliegenden Messzyklus übereinstimmt oder um maximal der doppelten Messunsicherheit davon abweicht und gleichzeitig die Differenz zwischen dem oberen Umschaltkonzentrationswert (cA) und dem unteren Umschaltkonzentrationswert (cS) mit der des unmittelbar zeitlich davorliegenden Messzyklus übereinstimmt oder um maximal der doppelten Messunsicherheit abweicht.

Unter der Messunsicherheit wird ein dem Messergebnis zugeordneter Parameter bezeichnet, der die Streuung der Messwerte kennzeichnet, die vernünftigerweise der Messgröße zugeordnet werden können. Eine einfache Messunsicherheit bedeutet eine Sicherheitswahrscheinlichkeit von 68,3 %, eine doppelte Messunsicherheit bedeutet eine Sicherheitswahrscheinlichkeit von 95,4%. (nach GUM, "Guide of the Expression of the Uncertainly in Measurement", herausgegeben von der ISO; Vornorm DIN 13005 / (in Willfried Schwarz "Genauigkeitsmaße richtig interpretieren", DVW-Schriftreihe, Band 46, 2004)

Es kann aber auch vorgesehen sein, den Messzyklus so oft zu wiederholen, bis die jeweils bestimmte Permeationsraten (P) eines Messzyklus mit der Permeationsrate mit der des zeitlich unmittelbar davorliegenden Messzyklus übereinstimmt oder maximal 20 % davon abweicht.

Der Spülgasvolumenstrom ($\dot{V}$) kann eingestellt werden und sollte bei den Verfahrensschritten (i) aufeinander folgender Messzyklen, die mit dem Verfahrensschritt (ii) beginnend durchgeführt werden, gleich sein.

Im stationären Zustand kann sich durch die Wiederholung der Messzyklen eine geschlossene Schleife zwischen den jeweiligen Umschaltkonzentrationen (cvA, cVS) bzw. den Umschaltkonzentrationswerten (cV, cS) einstellt.

Durch dieses Vorgehen kann die untere Nachweisgrenze der Permeationsratenbestimmung von einer technisch bedingten unteren sensorischen Nachweisgrenze entkoppelt werden. Die zur Berechnung der Permeationsrate (P) herangezogenen Verfahrensschritte (i) und Verfahrensschritte (ii) müssen dabei nicht zwingend aufeinanderfolgen, sondern es kann über mehrere der Verfahrensschritte (i) integriert werden, wobei sich die Integration entsprechend auf die Gesamtspülzeit bezieht sowie die Gesamtzeit ($t_{total}$) der Summe aller berücksichtigen Spül- und Anreicherungszeiten entspricht.

Bei der Durchführung eines ersten aus den Verfahrensschritten (i) und (ii) bestehender Messzyklus sollte die Messkammer, vorzugsweise bei einem Messzyklus der mit dem Verfahrensschritt (i) beginnt, durch eine Vorkonditionierung der Messkammer mindestens einmal durch Öffnen der Absperrelemente, vorzugsweise bis die vorgebbare untere Umschaltkonzentration (cvS) oder die vorgebbare Spülzeit (tvS) erreicht ist, mit dem permeatfreien Spülgasvolumenstrom ($\dot{V}$) vorgespült und anschließend die Messkammer durch Schließen der Absperrelemente wieder geschlossen werden. Der Startpunkt der Vorkonditionierung der Messkammer kann dabei auf der Isothermen-Kennlinie liegen, dessen Permeatenkonzentration größer als die obere Umschaltkonzentration (cvA) ist. Somit kann der Startpunkt der Vorkonditionierung der Messkammer auch im Bereich atmosphärischer Bedingungen liegen.

Während der Vorkonditionierung der Messkammer sollte die Messkammer von der Umgebungsatmosphäre isoliert sein und die Temperatur konstant gehalten werden.

Im stationären Zustand können innerhalb der geschlossenen Schleife Adsorptions- und Desorptionsvorgänge nicht das Messergebnis verfälschen, da letztendlich das Messprinzip genau auf diesen Effekten beruht. Erst dadurch wird bei einem innerhalb der geschlossenen Schleife durchgeführten Messzyklus vorteilhafterweise nur die Menge des Permeatgas detektiert, die während der Beobachtungszeit ($t_{total}$), die sich aus der Summe der Spülzeit (tS) und der Anreicherungszeit (tA) oder aus der Summe der vorgebbaren Spülzeit (tvS) und der vorgebaren Anreicherungszeit (tvA) ergibt, tatsächlich durch das Barriereelement permeiert.

Das beschriebene Verfahren kann vorzugsweise bei einer Temperatur im Bereich zwischen 10 °C und 80 °C für alle kondensierbaren Gase und Dämpfe, als Prüfgas bzw. Permeat durchgeführt werden. Das bevorzugte Prüfgas ist Wasserdampf, wobei darauf zu achten ist, dass ein permeatfreier Spülgasvolumenstrom ($\dot{V}$) bzw. im Fall von Wasserdampf als Prüfgas ein trockener Spülgasvolumenstrom ($\dot{V}$) eingesetzt wird.

Eine höhere Genauigkeit der Permeationsratebestimmung kann dadurch erreicht werden, dass der Mittelwert aus den jeweils bestimmten Permeationsraten bestimmt wird. Unter der Voraussetzung der geschlossenen Schleife kann zur Verringerung des Messfehlers ein Näherungswert der zu erwartenden Permeationsrate in einem darauffolgenden Messzyklus abgeschätzt werden, auf dessen Grundlage beispielsweise die vorgebbare obere Umschaltkonzentration (cvA) und/oder die vorgebbare untere Umschaltkonzentration (cvS) für nachfolgende Messzyklen eingegrenzt werden kann/können.

Die Genauigkeit der Permeationsratebestimmung kann erhöht werden, wenn die Differenz zwischen der vorgebbaren oberen Umschaltkonzentration (cvA) und der vorgebbaren unteren Umschaltkonzentration (cvS) erhöht wird bzw. in der zweiten Messvariante die vorgebbare Spülzeit (tvS) und/oder die vorgebbare Anreicherungszeit (tvA) verlängert wird.

Weiterhin kann eine Verringerung des Spülgasvolumenstroms ($\dot{V}$) zur Erhöhung der Messgenauigkeit beitragen. Ein geringerer Messfehler kann auch durch die Kombination der genannten Maßnahmen erzielt werden.

Eine Erhöhung der Messgenauigkeit kann auch durch eine Optimierung des Arbeitspunktes erreicht werden, der in einem Bereich liegt, in dem die Gaskonzentrationsmessung ihre höchste Empfindlichkeit aufweist. Dabei ist unter der Optimierung des Arbeitspunktes eine Anpassung der vorgebbaren oberen und unteren Umschaltkonzentration (cvA, cvS) bzw. eine Anpassung der vorgebbaren Spül- und Anreicherungszeiten (tvS, tvA) zu verstehen.

Für die Detektion der Permeatenkonzentration in der Gasphase der Messkammer sollte eine nichtinvasive, vorzugsweise optische und/oder kapazitive Messmethode eingesetzt werden, die den Permeaten nicht verbraucht und/oder verändert. Dabei sollte mit der genannten Messmethode eine Permeatenkonzentration in einem Bereich von 0,01 ppm bis 1000 ppm bestimmt werden können. Vorzugsweise kann ein laserbasiertes Messverfahren, besonders bevorzugt ein Laserdiodenspektroskopieverfahren eingesetzt werden, bei dem ein Laserstrahl mit einer vorzugsweise auf eine Absorptionslinie des nachzuweisenden Permeaten abgestimmten Emissionswellenlänge emittiert wird. Dabei besteht die Möglichkeit, dass der Laser einfach durch die Messkammer geführt wird. Die Messkammer kann aber auch als Mehrfachreflexionsmesszelle ausgeführt sein, bei der ein Laser mehrfach durch die Gasphase der Messkammer, beispielsweise durch mehrere Spiegel abgelenkt, hindurchgeführt wird. Die Quelle eines solchen Lasers kann innerhalb der Messkammer oder außerhalb angeordnet sein, wobei der Laserstrahl durch Fenster in die Messkammer eingekoppelt wird. Dabei kann eine Laserquelle eingesetzt werden, die einen Laserstrahl mit mehreren verschiedenen Wellenlängen emittiert. Vorteilhaft sind außerdem solche Laserquellen, bei denen die Wellenlänge des emittierten Laserstrahls, vorzugsweise im Betrieb verändert werden kann. Es können auch mehrere Laserquellen eingesetzt werden, wobei mehrere Laserstrahlen mit voneinander verschiedenen Wellenlängen emittiert werden.

Die Detektion der Permeatenkonzentration kann jedoch auch mit mindestens einem für den Permeaten spezifischen Gassensor durchgeführt werden, der innerhalb der Messzelle angeordnet ist. Der Einsatz mehrerer Gassensoren hat den Vorteil, dass mehrere verschiedene Permeate simultan bestimmt werden können. Es besteht jedoch auch die Möglichkeit der Verwendung mehrkanaliger Gassensoren, beispielweise eines UV-, VIS-, NIR-, MIR-, Quantenkaskadenlaser- oder eines Terahertzspektrometers mit dem ebenfalls mehrere Permeate simultan bestimmt werden können.

Weiterhin kann ein unspezifischer Drucksensor in Verbindung mit einer Vakuumpumpe eingesetzt werden, wobei der Spülgasvolumenstrom durch einen Pumpvolumenstrom ersetzt wird. Der Pumpvolumenstrom kann dabei beispielsweise via Druckabfallmessung über einer Blende bestimmt werden. Dabei ist der Permeat die dominierende Spezies im Pumpvolumenstrom, so dass der Pumpvolumenstrom vereinfacht als Permeatenvolumenstrom angesehen werden kann.

Die vorgebbare obere Umschaltkonzentration (cvA) und die vorgebbare untere Umschaltkonzentration (cvS) können so gewählt werden, dass sie in einem für das verwendete Messverfahren oder den verwendeten Gassensor optimalen Messbereich bzw. Arbeitsbereich liegen. Die Umschaltkonzentrationen können vorzugsweise jedoch so gewählt werden, dass sie eine untere Permeatenkonzentrationsgrenze bei 0,01 ppm nicht unterschreiten und eine obere Permeatenkonzentrationsgrenze bei 1000 ppm nicht überschreiten. Besonders bevorzugt sollte für die vorgebbare obere Umschaltkonzentration (cvA) 100 ppm gewählt werden. Dadurch, dass die vorgebbaren Umschaltkonzentrationen (cvA, cvS) in einem für die verwendete(n) Sensor(en) optimalen Messbereich bzw. Arbeitsbereich festgelegt werden können, kann eine besonders hohe Genauigkeit der Permeationsmessung erzielt werden, die höher als die Genauigkeit der klassischen trägergasbasierten Permeationsmessung an der Nachweisgrenze des verwendeten Sensors sein kann, bzw. macht eine Bestimmung der Permeationsrate im Vergleich zu einer klassischen trägergasbasierten Permeationsmessung erst möglich.

Eine Vorrichtung zur Durchführung des erfindungsgemäßen Verfahrens weist eine Messkammer mit mindestens zwei Absperrelementen zum Öffnen und Schließen auf. Weiterhin umfasst die Vorrichtung eine Detektionseinheit, mit der eine Konzentration mindestens eines Permeaten bestimmbar ist, der als Prüfgas mit konstanter Konzentration in einer Prüfgaskammer vorliegend, durch ein zwischen der Prüfgaskammer und der Messkammer angeordnetes Barriereelement, das eine bekannte permeierbare Fläche (A) aufweist, in die Messkammer permeiert, wobei die Messkammer ab Erreichen einer vorgebbaren oberen Umschaltkonzentration (cvA) oder ab Erreichen einer vorgebbaren Anreicherungszeit (tvA), durch Öffnen der Absperrelemente mit einem konstanten prüfgasfreien Spülgasvolumenstrom ($\dot{V}$) spülbar ist, infolge dessen die Permeatenkonzentration (c) in der Messkammer sinkt und der Verlauf der Permeatenkonzentration (c) sowie bei Vorgabe der oberen Umschaltkonzentration (cvA) die Spülzeit (tS) bis zum Erreichen der vorgebbaren unteren Umschaltkonzentration (cvS) bestimmbar sind, und bei Erreichen einer vorgebbaren unteren Umschaltkonzentration (cvS) oder einer vorgebbaren Spülzeit (tvS) durch Schließen der Absperrelemente schließbar ist, wobei die Permeatenkonzentration in der geschlossenen Messkammer in Folge der Permeation steigt und die Anreicherungszeit (tA) bis zum Erreichen der vorgebbaren oberen Umschaltkonzentration (cvA) bestimmbar ist.

Das vorgeschlagene Verfahren kann ohne aufwendige Probenpräparation auf einfache Weise unter den oben beschriebenen Voraussetzungen, d.h. der nichtinvasiv arbeitende Sensor befindet sich in der Messkammer, mit weiteren bereits bestehenden Zweikammer-Messsystemen verwendet werden.

Nachfolgend soll die vorliegende Erfindung anhand von Diagrammen und einem Ausführungsbeispiel näher erläutert werden.

Es zeigt:

Figur 1a:   das allgemeine Verfahrensprinzip anhand des zeitlichen Verlaufs einer Messung in einem schematischen Zustandsdiagramm in der ersten bzw. zweiten Messvariante anhand des Zusammenhangs zwischen der Konzentration des adsorbierten Permeaten und der Permeatenkonzentration in der Gasphase während der Permeation eines Prüfgases in die Messkammer ausgehend von Atmosphärenbedingungen, und

Figur 1b:   eine schematische Darstellung eines Permeatengaskonzentrations-Zeit-Verlaufs in einer Messkammer in der ersten Messvariante, und

Figur 1c:   eine schematische Darstellung eines Permeatengaskonzentrations-Zeit-Verlaufs in einer Messkammer in der zweitem Messvariante, und

Figur 1d:   eine Darstellung eines mit der ersten Messvariante ermittelten Permeatengaskonzentrations-Zeit-Verlauf aufeinander folgender Messzyklen zusammen mit den jeweils bestimmten Permeationsraten, und

Figur 2:   eine schematische Schnittdarstellung einer Vorrichtung zur Durchführung des erfindungsgemäßen Verfahrens mit einem (optischen) Durchstrahlungsverfahren, und

Figur 3   eine weitere schematische Schnittdarstellung der Vorrichtung zur Durchführung des erfindungsgemäßen Verfahrens mit einem kapazitiven Gassensor.

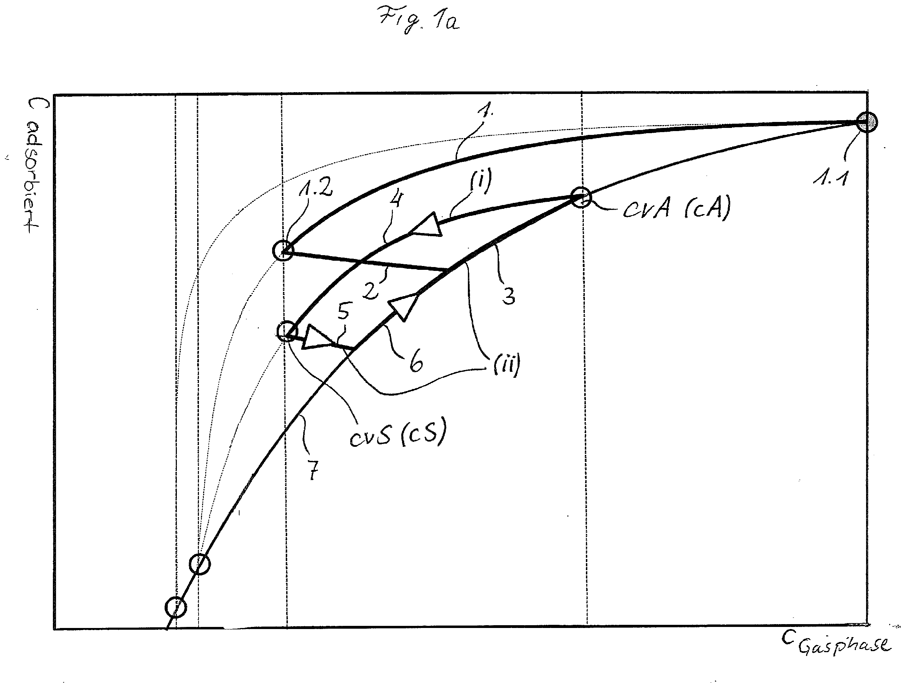

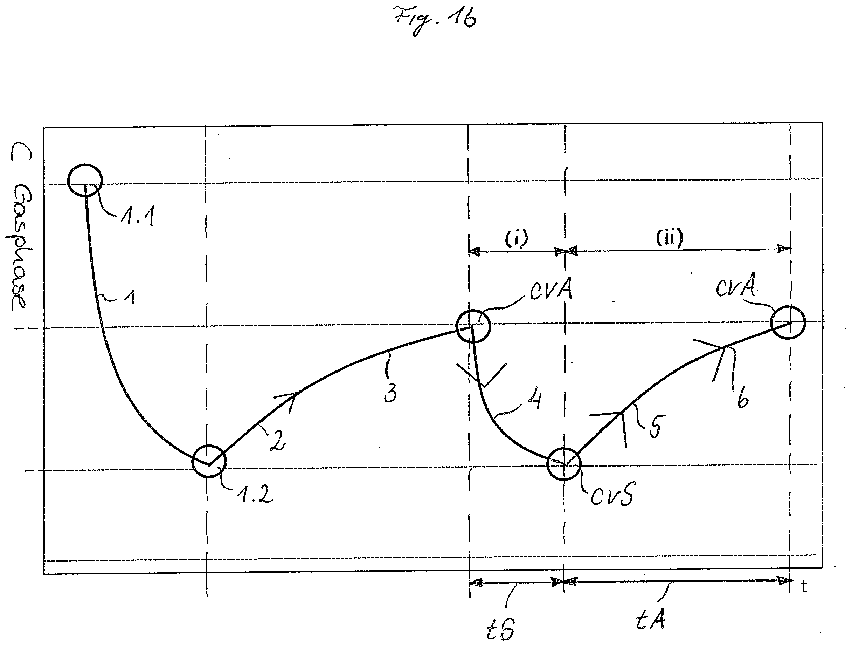

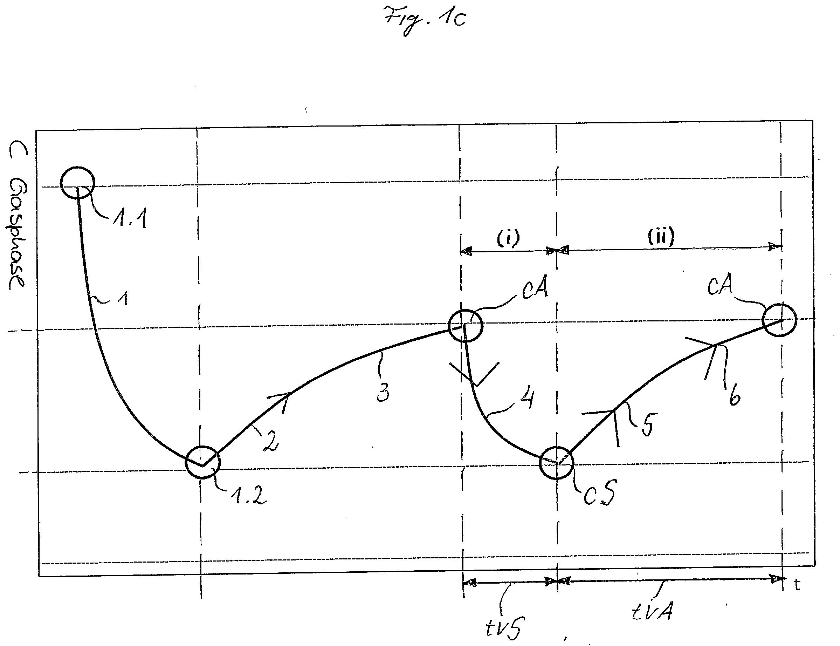

Die während des erfindungsgemäßen Verfahrens auftretenden Konzentrationsänderungen des Permeaten in der Gasphase einer Messkammer 8.7 können anhand der in den Figuren 1a, 1b und 1c dargestellten schematischen Diagramme des zeitlichen Verlaufs durch übereinstimmende Bezugszeichen nachvollzogen werden, wobei die in der Figur 1a in Klammern gehaltenen Bezugszeichen cA und cS für die zweite Messvariante gelten.

Das in der Figur 1a dargestellte Zustandsdiagramm beschreibt schematisch den Zusammenhang zwischen der Konzentration des an den Festkörperoberflächen adsorbierten Permeaten und der Permeatenkonzentration in der Gasphase während der Vorkonditionierung der Messkammer und den Verfahrensschritten (i) und (ii). Dabei entsprechen die mit $c_{adsorbiert}$ bezeichnete Achse der Konzentration des an den Festkörperoberflächen adsorbierten Permeaten und die mit $c_{Gasphase}$ bezeichnete Achse der in der Gasphase vorhandenen Permeatenkonzentration. Die mit dem Bezugszeichen 7 gekennzeichnete Systemisothermen-Kennlinie beschreibt die Funktion des Gleichgewichtszustandes von der Permeatenkonzentration in der Gasphase zur Konzentration des an den Festkörperoberflächen adsorbierten Permeaten in der Messkammer 8.7. Dabei wird das spezifische Adsorptionsverhalten jedes im Kontakt mit dem Permeaten stehenden Materials, wie beispielsweise das Zellwandmaterial, die Materialien der optischen Elemente (Fenster, Spiegel, Fixierung), Dichtungsmaterialien und die Probe, d.h. das Barrierematerial selbst, berücksichtigt.

Mit dem Bezugszeichen 1 ist in der Figur 1a der Konzentrationsverlauf während der Spülung innerhalb der Vorkonditionierung der Messkammer 8.7 dargestellt, der aufgrund der Spülung einer transienten Isothermen-Kennlinie folgt. Weiterhin zeigt der mit dem Bezugszeichen 2 gekennzeichnete Kurvenverlauf den Anstieg der Permeatenkonzentration in der Gasphase ohne signifikante Änderung der Konzentration des adsorbierten Permeaten, unmittelbar nach Schließen der Messkammer 8.7 im Punkt 1.2. Da die Oberflächenbelegung in diesem Zustand größer ist als die Oberflächenbelegung im Gleichgewichtszustand bei gleicher Permeatenkonzentration in der Gasphase, verbleibt sowohl der desorbierte als auch der unmittelbar permeierte Permeat ausschließlich in die Gasphase, wodurch der mit dem Bezugszeichen 2 gekennzeichnete Konzentrationsanstieg lediglich mit geringem Abfall, d.h. nahezu ohne Änderung der Konzentration des adsorbierten Permeaten, bis zu einem Schnittpunkt mit der Systemisothermen-Kennlinie 7 verläuft. Von dort folgt der Konzentrationsverlauf des Permeaten der Systemisothermen-Kennlinie 7, d.h. im Gleichgewichtszustand bis zum Erreichen einer vorgebbaren oberen Umschaltkonzentration cvA. Im Fall der Durchführung der zweiten Messvariante, bei der die Anreichungszeit tvA vorgegeben wird, folgt der Konzentrationsverlauf des Permeaten der Systemisothermen-Kennlinie 7, wobei der Startpunkt eines Verfahrensschritts (i) nach einer frei wählbaren Zeit festgelegt wird. Am Ende der vorgebbaren Anreicherungszeit wird dabei ein oberer Umschaltkonzentrationswert cA erreicht, der in der Figur 1a in Klammern gefasst dargestellt ist.

Der mit den Bezugszeichen 4 in Fig. 1a gekennzeichnete Kurvenverlauf beschreibt die Konzentrationsänderung des Permeaten in der Messkammer 8.7, die durch den Spülgasvolumenstrom ($\dot{V}$) bei geöffneter Messkammer 8.7 während des Verfahrensschritts (i) hervorgerufen wird, bis bei der ersten Messvariante die vorgebbare untere Umschaltkonzentration cvS erreicht ist bzw. bei der zweiten Messvariante eine vorgebbare Spülzeit tvS erreicht ist, wobei sich am Ende der vorgebbaren Spülzeit tvS der in der Fig. 1a in Klammern gefasste untere Umschaltkonzentrationswert cS einstellt.

Der im Verfahrensschritt (ii) nach dem Schließen der Messkammer 8.7 in Folge der Permeation eintretende Konzentrationsanstieg des Permeaten, ist mit dem Bezugszeichen 5 gekennzeichnet. Bei Erreichen eines Schnittpunktes mit der Systemisothermen-Kennlinie 7 steigt die Konzentration des Permeaten entlang der Systemisothermen-Kennlinie 7 an. Ab dem Schnittpunkt mit der Systemisothermen-Kennlinie 7, bei der die Konzentrationen von adsorbiertem Permeaten und Permeaten in der der Gasphase im Gleichgewicht (GGW) vorliegen, ist der Kurvenverlauf mit dem Bezugszeichen 6 gekennzeichnet. Bei der ersten Messvariante endet der Verfahrensschritt (ii) bei Erreichen der vorgebbaren oberen Umschaltkonzentration cvA. Bei der zweiten Messvariante endet der Verfahrensschritt (ii) bei Erreichen der vorgebbaren Anreicherungszeit tvA, wobei der obere Umschaltkonzentrationswert cA erreicht ist.

Die Figur 1b und Figur 1c zeigen eine schematische Darstellung eines Permeatengaskonzentrations-Zeit-Verlaufs in einer Messkammer 8.7 in der ersten bzw. in der zweiten Messvariante. Die mit den Bezugszeichen 1, 2, und 3 dargestellte Verlaufskurve bezeichnet eine in der Gasphase der Messkammer 8.7 vorkommende Konzentrationsänderung eines Permeaten während einer Vorkonditionierung der Messkammer 8.7. Das Bezugszeichen 4 beschreibt den Verlauf der Permeatenkonzentration in der Messkammer 8.7 während eines Verfahrensschritts (i). Die Bezugszeichen 5 und 6 beschreiben den Verlauf der Permeatenkonzentration in der Messkammer 8.7 während eines Verfahrensschritts (ii). Während der beiden Verfahrensschritte (i) und (ii) permeiert das Prüfgas, das in konstanter Konzentration in der Prüfgaskammer 8.3 vorhanden ist, aus der Prüfgaskammer 8.3 kontinuierlich durch ein zwischen der Prüfgaskammer 8.3 und der Messerkammer 8.7 angeordnetes Barriereelement 8.5, das eine bekannte permeierbare Fläche A aufweist, in die Messkammer 8.7 und bewirkt dort die Änderung der Permeatenkonzentration.

Der in der Fig. 1b und 1c mit dem Bezugszeichen 1 gekennzeichnete Kurvenabschnitt beschreibt eine Spülung im Rahmen der Vorkonditionierung der Messkammer 8.7, bei der die zuvor geöffnete Messkammer 8.7 von einer Spülstart-Permeatenkonzentration 1.1 ausgehend mit einem permeatfreien Spülgasvolumenstrom ($\dot{V}$) gespült wird, bis eine mit dem Bezugszeichen 1.2 bezeichnete Spülend-Permeatenkonzentration erreicht ist. Von der Spülend-Permeatenkonzentration 1.2 ausgehend, bei der der Spülgasvolumenstrom ($\dot{V}$) unterbrochen und die Messkammer 8.7 wieder geschlossen wird, steigt die Permeatenkonzentration in der Messkammer 8.7 bedingt durch die kontinuierliche Permeation des Prüfgases an, wie anhand des mit den Bezugszeichen 2 und 3 beschriebenen Kurvenverlaufs nachvollziehbar ist.

Die Vorkonditionierung der Messkammer 8.7 wird für beide Messvarianten gleichermaßen durchgeführt.

Wie der Fig. 1b, die die erste Messvariante zeigt, zu entnehmen ist, erreicht der mit den Bezugzeichen 2 und 3 beschriebene Kurvenverlauf die vorgebbare obere Umschaltkonzentration cvA bei der der Verfahrensschritt (i) beginnt. Der mit dem Bezugzeichen 4 gekennzeichnete Kurvenverlauf, der einen Permeatenkonzentrationsverlauf c entspricht, beschreibt die Verringerung der Permeatenkonzentration in der Gasphase der Messkammer 8.7 während des Verfahrensschritts (i), bei dem die Messkammer 8.7 bis zum Erreichen einer vorgebbaren unteren Umschaltkonzentration cvS mit einem konstanten permeatfreien Spülgasvolumenstrom ($\dot{V}$) gespült wird. Der Kurvenabschnitt endet bei Erreichen einer vorgebbaren unteren Umschaltkonzentration cvS, an der der Spülgasvolumenstrom ($\dot{V}$) unterbrochen indem die Messkammer 8.7 geschlossen wird. Mit dem Bezugzeichen tS ist die Spülzeit vom Erreichen der vorgebbaren oberen Umschaltkonzentration cvA bis zum Erreichen der vorgebbaren unteren Umschaltkonzentration cvS gekennzeichnet. Die Bezugzeichen 5 und 6 beschreiben den Kurvenverlauf der Permeatenkonzentration während eines Verfahrensschritts (ii), bei dem in der geschlossenen Messkammer 8.7 die Permeatenkonzentration in Folge der Permeation durch das Barriereelement 8.5 ansteigt. Mit dem Bezugzeichen tA wird die Anreicherungszeit, ausgehend von der vorgebbaren unteren Umschaltkonzentration cvS bis zum Erreichen der vorgebbaren oberen Umschaltkonzentration cvA, beschrieben.

Bei der mit der Fig. 1c dargestellten zweiten Messvariante erreicht der mit den Bezugzeichen 2 und 3 beschriebene Kurvenverlauf den Startpunkt des Verfahrensschritts (i) nach einer frei wählbaren Anreicherungszeit (nicht dargestellt). Dabei entspricht der Startpunkt im vorliegenden Fall dem oberen Umschaltkonzentrationswert cA. Der mit dem Bezugzeichen 4 gekennzeichnete Kurvenverlauf, der einen Permeatenkonzentrationsverlauf c entspricht, beschreibt die Verringerung der Permeatenkonzentration in der Gasphase der Messkammer 8.7 während des Verfahrensschritts (i), bei dem die Messkammer 8.7 während der vorgebbaren Spülzeit tvS mit einem konstanten permeatfreien Spülgasvolumenstrom ($\dot{V}$) gespült wird. Der Kurvenabschnitt endet bei Erreichen der vorgebbaren Spülzeit tvS, wobei der untere Umschaltkonzentrationswert cS erreicht ist. Der Spülgasvolumenstrom ($\dot{V}$) wird unterbrochen indem die Messkammer 8.7 geschlossen wird. Die Bezugzeichen 5 und 6 beschreiben den Kurvenverlauf der Permeatenkonzentration während eines Verfahrensschritts (ii), bei dem in der geschlossenen Messkammer 8.7 die Permeatenkonzentration in Folge der Permeation durch das Barriereelement 8.5 innerhalb der vorgebbaren Anreicherungszeit tvA ansteigt. Dabei endet der Verfahrensschritt (ii) nach Ablauf der vorgebbaren Anreicherungszeit tvA, wobei mit Erreichen des oberen Umschaltkonzentrationswerts cA der Ausgangpunkt des Verfahrensschritts (i) erreicht ist.

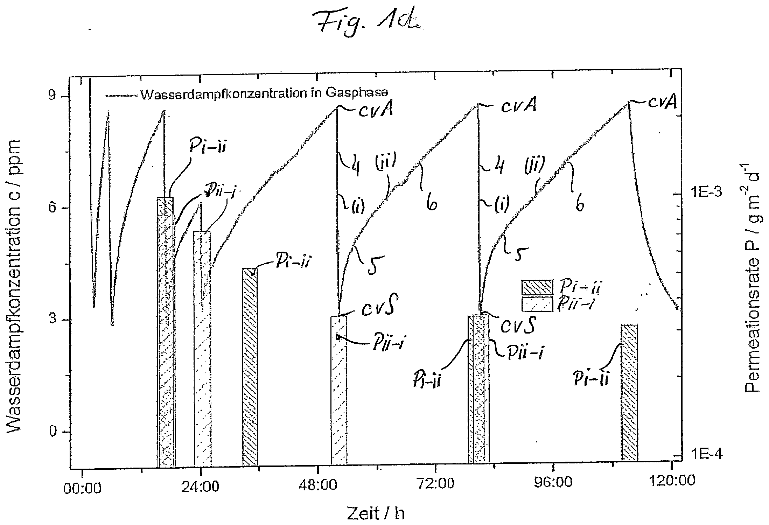

Die Figur 1d zeigt eine Darstellung eines mit der ersten Messvariante ermittelten Permeatengaskonzentrations-Zeit-Verlaufs aufeinander folgender Messzyklen zusammen mit den jeweils pro Messzyklus bestimmten Permeationsraten, die als schraffierte Säulen dargestellt sind. Dabei kennzeichnen Säulen, die die Bezeichnung Pi-ii tragen, jeweils die Permeationsraten die bei einem mit dem Verfahrensschritt (i) begonnenen Messzyklus bestimmt wurden. Hingegen sind die Säulen, bei denen die Permeationsraten jeweils mit einem mit dem Verfahrensschritt (ii) begonnenen Messzyklus bestimmt wurden, mit der Bezeichnung Pii-i gekennzeichnet. Die linke Vertikalachse weist eine Skalierung in ppm der Permeatenkonzentration (Wasserdampfkonzentration) in der Messkammer 8.7 auf, wobei die rechte Vertikalachse eine Skalierung der Permeationsrate in g m$^{-2}$ d$^{-1}$ aufweist. Bei den in der Figur 1d dargestellten Permeatenkonzentrationen und jeweils bestimmten Permeationsraten handelt es sich um konkrete Ergebnisse, die mit einer nachfolgend beschriebenen Vorrichtung und einem weiter unten ausführlich beschriebenen Beispiel des erfindungsgemäßen Verfahrens ermittelt wurden.

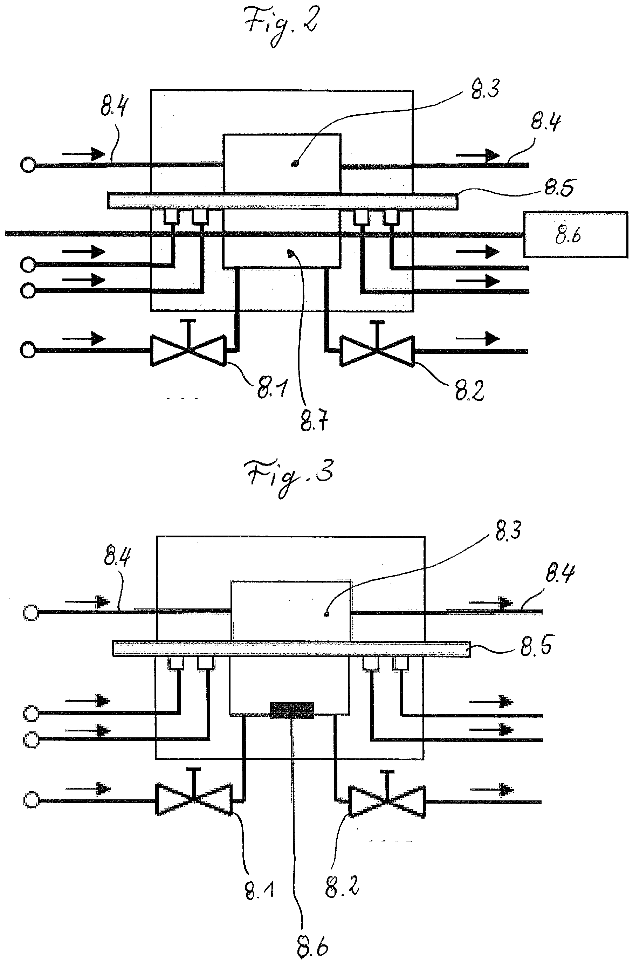

Die Figur 2 zeigt eine schematische Schnittdarstellung eines Vorrichtungsbeispiels zur Durchführung des erfindungsgemäßen Verfahrens. Die Vorrichtung umfasst eine Messkammer 8.7 mit zwei Absperrelementen 8.1 und 8.2 zum Öffnen und Schließen, eine Prüfgaskammer 8.3 mit konstanter Prüfgaskonzentration, ein zwischen der Prüfgaskammer 8.3 und der Messkammer 8.7 angeordnetes Barriereelement 8.5 mit bekannter Fläche A und ein an der Messkammer 8.7 angeordnete Detektionseinrichtung 8.6 zur Detektion eines aus der Prüfgaskammer 8.3 durch das Barriereelement 8.5 in die Messkammer 8.7 permeierenden Prüfgases. Im vorliegenden Beispiel ist die Detektionseinrichtung als Laserdiodenspektroskopie ausgeführt, wobei ein Laserstahl durch hier nicht dargestellte Fenster durch die Messkammer 8.7 geführt wird.

Die Figur 3 zeigt eine Vorrichtung wie in Fig. 2 mit dem Unterschied, dass die Detektionseinrichtung 8.6 als kapazitiver Gassensor ausgeführt ist, der innerhalb der Messkammer 8.7 angeordnet ist.

In den vorliegenden Vorrichtungsbeispielen der Fign. 2 und 3 sind die Absperrelemente 8.1 und 8.2 als Ventile ausgeführt. Es können aber auch Kugelhähne, Schieber oder MFC (mass flow controller) eingesetzt werden.

Bei dem Barriereelement 8.5 kann es sich beispielsweise um Materialien wie Metallfolien, (metall-)beschichtete Polymerfolien sowie deren Laminate oder komplexen Multischichtsystemen aus Polymeren, Metallen und anorganischen Materialien (Oxide, Nitride, Carbide etc.) handeln. Im nachfolgenden Ausführungsbeispiel wurde POLO®-Folie, bestehend aus einer 75 µm PET Melinex 400CW Substratfolie und einem Schichtverbund von 180 nm Zink-Zinnoxid, 800 nm ORMOCER®, 180 nm Zink-Zinnoxid und 800 nm ORMOCER®, als Barrierematerial eingesetzt, das eine Gesamtdicke von 77 µm aufweist.

Bei der in der Fig. 2 gezeigten Vorrichtung zur Durchführung des erfindungsgemäßen Verfahrens, wird in der Messkammer 8.7, die einen Durchmesser von 131 mm und eine Höhe von 9 mm aufweist, mit einer Detektionseinrichtung 8.6, die in dem vorliegenden Fall als Laserdiodenspektrometer ausgeführt ist, die Konzentration von Wasserdampf in der Gasphase bestimmt, der ausgehend von der Prüfgaskammer 8.3 in der ein durch die Anschlüsse 8.4 zugeführter Wasserdampfvolumenstrom konstanter Konzentration strömt, durch ein zwischen der Prüfgaskammer 8.3 und der Messkammer 8.7 angeordnetes Barriereelement 8.5 in die Messkammer 8.7 permeiert. Die Wasserdampfkonzentration in der Gasphase der Messkammer 8.7 wird anhand der Abschwächung der Laserstrahlintensität aufgrund einer Absorption durch die Wasserdampfmoleküle unter Verwendung einer bekannten entsprechend angepassten Emissionswellenlänge der Laserdiode ermittelt. Die von dem Wasserdampf durch das Barriereelement 8.5 permeierbare Fläche A entspricht dabei der zwischen der Prüfgaskammer 8.3 und der Messkammer 8.7 gebildeten korrespondierenden offenen Fläche, durch die der Wasserdampf aus der Prüfgaskammer 8.3 in die Messkammer 8.7 permeieren kann. Im vorliegenden Fall beträgt die vom Wasserdampf permeierbare Fläche circa $1{,}347 \times 10^{-2}$ m$^2$. Das zur Detektion der Wasserdampfkonzentration in der Messkammer 8.7 verwendete Laserdiodenspektrometer emittiert einen Laserstrahl, der durch die als Mehrfachreflexionsmesszelle für 20 Durchstrahlungen ausgeführte Messkammer 8.7 über einen 2 m langen optischen Weg hindurchgeführt wird. Weiterhin ist das Laserdiodenspektrometer so ausgeführt, dass eine Wasserdampfkonzentration im Bereich von 0,01 ppm bis 1000 ppm detektiert werden kann.

Vor der Durchführung eines ersten aus den Verfahrensschritten (i) und (ii) bestehenden Messzyklus wird die Vorkonditionierung der Messkammer 8.7 durchgeführt. Dabei wird die Messkammer 8.7 durch Öffnen der Ventile 8.1 und 8.2 mit einem trockenen also wasserdampffreien Stickstoff- Spülgasvolumenstrom ($\dot{V}$) von 55 sccm gespült und anschließend durch Schließen der Ventile wieder geschlossen.

Der zeitliche Konzentrationsverlauf des Permeaten in der Messkammer 8.7 kann anhand der Fig. 1d nachvollzogen werden. Bei der Durchführung des Verfahrensschritts (i) wird die Messkammer 8.7 bei Erreichen einer mit 8,6 ppm festgelegten oberen Umschaltkonzentration cvA durch Öffnen der Ventile 8.1, 8.2 mit einem bei 55 sccm eingestellten Spülgasvolumenstrom ($\dot{V}$) des trockenen Stickstoffspülgases gespült, bis die mit 2,8 ppm vorgegebene untere Umschaltkonzentration cvS erreicht ist. Dabei wird mit dem Laserdiodenspektrometer ein wie mit dem in der Figur 1b mit dem Bezugszeichen 4 beispielhaft bzw. in der Figur 1c mit dem selben Bezugszeichen konkret beschriebene Verlauf der Wasserdampfkonzentration c in der Gasphase der Messkammer 8.7 aufgezeichnet, der ausgehend von der vorgegebenen oberen Umschaltkonzentration cvA bei 8,6 ppm bis zum Erreichen der vorgegebenen unteren Umschaltkonzentration cvS bei 2,8 ppm verläuft. Es wird außerdem die bis zum Erreichen der unteren Umschaltkonzentration cvS benötigte Spülzeit tS ermittelt, die im vorliegenden Fall 30 Minuten beträgt.

Durch den Spülgasvolumenstrom ($\dot{V}$) während der Spülzeit tS des Verfahrensschritts (i) sinkt die Wasserdampfkonzentration in der Gasphase im Vergleich zur Konzentration des adsorbierten Wasserdampfs stärker als im durch die System-Isotherme beschriebenen Gleichgewichtszustand (GGW), wodurch der GGW in der Messkammer 8.7 aufgehoben wird. Dabei folgen die Konzentrationen des adsorbierten Wasserdampfes und des gasförmigen Wasserdampfes dem in der Figur 1a mit dem Bezugszeichen 4 gekennzeichneten Verlauf einer transienten Isotherme, deren Verlauf von ihrer Startkonzentration bei 8,6 ppm, der Wandbelegung am Start und von dem Spülgasvolumenstrom ($\dot{V}$) abhängen.

Im nachfolgenden Verfahrensschritt (ii) wird die Messkammer 8.7 durch Schließen der Ventile 8.1 und 8.2 wieder geschlossen und die Wasserdampfkonzentration, die in Folge der kontinuierlichen Permeation durch das Barriereelement 8.5 wieder ansteigt, gemessen. Die während des Verfahrensschritts (ii) in der Messkammer 8.7 ansteigende Wasserdampfkonzentration ist mit den Bezugszeichen 5 und 6 in der Figur 1b beispielhaft und in der Figur 1c konkret nachvollziehbar. Dabei wird ausgehend von der vorgegebenen unteren Umschaltkonzentration bei 2,8 ppm, die Anreicherungszeit tA bis zum Erreichen der vorgegebenen oberen Umschaltkonzentration bei 8,6 ppm bestimmt.

Die Permeationsrate kann erst dann sicher bestimmt werden, wenn sich ein stationärer Zustand eingestellt hat, wobei das Prüfgas kontinuierlich durch das Barriereelement 8.5 permeiert. Im genannten Beispiel wurde das Vorliegen des stationären Zustands dadurch überprüft, dass der aus den Verfahrensschritten (i) und (ii) bestehende Messzyklus wiederholt wurde, bis eine Übereinstimmung der Gesamtzykluszeit aus der ermittelten Spülzeit tS und der ermittelten Anreicherungszeit tA eines Messzyklus mit mindestens der Gesamtzykluszeit eines davorliegenden Messzyklus mit einer maximalen Abweichung von $\pm$ 13 % festgestellt werden konnte. Dies verdeutlicht insbesondere die Darstellung der Fig. 1c. Während in den ersten 48 Stunden die Anreicherungs- und Spülzeiten bzw. die Gesamtzykluszeiten und die ermittelten Permeationsraten stark schwanken, stellt sich nach circa 48 bis 54 Stunden der stationäre Zustand ein, wobei die Gesamtzykluszeiten aufeinanderfolgender Messzyklen nahezu übereinstimmen und konstante Permeationsraten bestimmt werden können.

Im vorliegenden Fall beträgt die ermittelte Anreicherungszeit tA 28:30 (Stunden:Minuten), so dass mit der aus dem Verfahrensschritt (ii) bestimmten Anreicherungszeit tA sowie der aus dem Verfahrensschritt (i) bestimmten Spülzeit tS und dem während dieser Spülzeit tS bestimmten Verlauf der Wasserdampfkonzentration c, die Permeationsrate P des Barriereelements 8.5 mit der Gleichung

$$(1) \qquad P = \frac{\int (c(t) \cdot \dot{V}) \, dt \, \cdot \, M \, \cdot \, p}{R \cdot T \cdot t_{total} \cdot A}$$

berechnet werden kann, wobei $t_{total}$ die Summe aus der Spülzeit tS und der Anreicherungszeit tA, M die molare Masse des Prüfgases (Wasserdampf), p der eingehaltene Druck bei 0.101325 MPa, R die allgemeine Gaskonstante und T die während der Verfahrensschritte (i) und (ii) eingehaltene Temperatur sind. Im vorliegenden Fall beträgt die Wasserdampfpermeationsrate des Barriereelements 8.5 : P = 3 x 10$^{-4}$ g m$^{-2}$ d$^{-1}$.

Zur Überprüfung des Vorliegens des stationäre Zustandes sollte der Messzyklus bei der Permeationsratebestimmung mit der zweiten Messvariante so oft wiederholt werden, bis der untere Umschaltkonzentrationswert cS eines Messzyklus mit dem des zeitlich unmittelbar davorliegenden Messzyklus übereinstimmt oder um maximal einer doppelten Messunsicherheit davon abweicht und gleichzeitig die Differenz zwischen dem oberen Umschaltkonzentrationswert cA und dem unteren Umschaltkonzentrationswert cS mit der des unmittelbar zeitlich davorliegenden Messzyklus übereinstimmt oder um maximal die doppelte Messunsicherheit abweicht.

Unabhängig von der ersten oder zweiten Messvariante kann das Vorliegen des stationären Zustands auch dadurch ermittelt werden, in dem der Messzyklus wiederholt wird, bis die jeweils bestimmte Permeationsrate eines Messzyklus mit der Permeationsrate mindestens eines davorliegenden Messzyklus übereinstimmt oder maximal 20 % davon abweicht.

Zur Erhöhung der Messgenauigkeit kann der Spülgasvolumenstroms ($\dot{V}$) verringert werden. Denkbar wäre beispielsweise eine Verringerung auf 5 sccm. Für die erste Messvariante kann eine verbesserte Messgenauigkeit dadurch erreicht werden, dass die vorgebbare obere Umschaltkonzentration cvA angehoben und die vorgebbare untere Umschaltkonzentration cvS verringert wird, so dass die Konzentrationsdifferenz zwischen den beiden Umschaltkonzentrationen größer wird. Für die zweite Messvariante kann eine verbesserte Messgenauigkeit durch eine Verlängerung der vorgebbaren Spülzeit tvS und der vorgebbaren Anreicherungszeit tvA erzielt werden.

Bei einer weiteren Ausführungsform des erfindungsgemäßen Verfahrens ist der Einsatz mehrerer Gassensoren zur simultanen Bestimmung unterschiedlicher gleichzeitig permeierender Prüfgase vorgesehen. Es besteht jedoch auch die Möglichkeit der Verwendung mehrkanaliger Gassensoren, beispielsweise eines UV-, VIS-, NIR-, MIR-, Quantenkaskadenlaser-, oder Terahertzspektrometers mit dem ebenfalls mehrere Permeate simultan bestimmt werden können.

**Patentansprüche**

1. Verfahren zur Bestimmung der Permeationsrate von Barrierematerialien,
bei dem in einer Messkammer (8.7), die mindestens zwei Absperrelemente (8.1; 8.2) zum Öffnen und Schließen aufweist, eine Konzentration mindestens eines Permeaten bestimmt wird, der als Prüfgas in einer Prüfgaskammer (8.3) mit konstanter Konzentration vorliegend, durch ein zwischen der Prüfgaskammer (8.3) und der Messkammer (8.7) angeordnetes Barriereelement (8.5), das eine bekannte permeierbare Fläche (A) aufweist, in die Messkammer (8.7) permeiert, wobei
in einem Verfahrensschritt (i),
in einer ersten Messvariante ab Erreichen einer vorgebbaren oberen Umschaltkonzentration (cvA) oder in einer zweiten Messvariante ab Erreichen einer vorgebbaren Anreicherungszeit (tvA), die Messkammer (8.7) durch Öffnen der Absperrelemente (8.1; 8.2) mit einem konstanten permeatfreien Spülgasvolumenstrom ($\dot{V}$) gespült wird, wobei die Permeatenkonzentration (c) in der offenen Messkammer (8.7) in Folge des Spülens sinkt, und dabei
der zeitliche Verlauf dieser Permeatenkonzentration (c) entweder
in der ersten Messvariante bis zum Erreichen einer vorgebbaren unteren Umschaltkonzentration (cvS) bestimmt wird, wobei dabei eine Spülzeit (tS) bestimmt wird,
oder
in der zweiten Messvariante bis zum Erreichen einer vorgebbaren Spülzeit (tvS) bestimmt wird,
und
in einem Verfahrensschritt (ii),
in der ersten Messvariante bei Erreichen der vorgebbaren unteren Umschaltkonzentration (cvS) oder
in der zweiten Messvariante bei Erreichen der vorgebbaren Spülzeit (tvS),
die Messkammer (8.7) durch Schließen der Absperrelemente (8.1; 8.2) geschlossen wird, wobei die Permeatenkonzentration (c) in der geschlossenen Messkammer (8.7) in Folge der Permeation ansteigt, dabei
in der ersten Messvariante eine Anreicherungszeit (tA) bis zum Erreichen der vorgebbaren oberen Umschaltkonzentration (cvA) bestimmt wird, und anschließend

mit der Anreicherungszeit (tA) und mit der mit der ersten Messvariante im Verfahrensschritt (i) bestimmten Spülzeit (tS) und dem während der Spülzeit (tS) bestimmten Verlauf der Permeatenkonzentration (c),
oder
mit dem mit der zweiten Messvariante im Verfahrensschritt (i) während der vorgebbaren Spülzeit (tvS) bestimmten Verlauf der Permeatenkonzentration (c) und mit der vorgebbaren Spülzeit (tvS) und der vorgebbaren Anreicherungszeit (tvA),
die Permeationsrate (*P*) des Barriereelements (8.5) mit der Gleichung

$$P = \frac{\int (c(t) \cdot \dot{V})\ dt\ \cdot\ M\ \cdot\ p}{R \cdot T \cdot t_{total} \cdot A}$$

berechnet wird, wobei $t_{total}$ für die erste Messvariante die Summe der Spülzeit (tS) und der Anreicherungszeit (tA) und für die zweite Messvariante die Summe der vorgebbaren Spülzeit (tvS) und der vorgebbaren Anreicherungszeit (tvA), c die Permeatenkonzentration, M die molare Masse des Permeaten, p der eingehaltene Druck, R die allgemeine Gaskonstante und T die während der Verfahrensschritte (i) und (ii) eingehaltene Temperatur sind.

2. Verfahren nach Anspruch 1, **dadurch gekennzeichnet, dass** das Verfahren mit dem Verfahrensschritt (i) oder mit dem Verfahrensschritt (ii) beginnend durchgeführt wird.

3. Verfahren nach Anspruch 1 oder 2, **dadurch gekennzeichnet, dass** die Permeationsrate (P) jeweils aus mindestens einem, jeweils aus mindestens einem Verfahrensschritt (i) und mindestens einem Verfahrensschritt (ii) bestehenden Messzyklus bestimmt wird.

4. Verfahren nach einem der Ansprüche 1 bis 3, **dadurch gekennzeichnet, dass** in der ersten Messvariante der Messzyklus so oft wiederholt wird, bis die sich aus der Summe der Anreicherungszeit (tA) und der Spülzeit (tS) ergebende Gesamtzykluszeit mit der des zeitlich unmittelbar davorliegenden Messzyklus übereinstimmt oder um maximal die doppelte Messunsicherheit abweicht.

5. Verfahren nach Anspruch 3, **dadurch gekennzeichnet, dass** sich bei der zweiten Messvariante am Ende der vorgebbaren Anreicherungszeit (tvA) ein oberer Umschaltkonzentrationswert (cA) und am Ende der vorgebbaren Spülzeit (tvS) ein unterer Umschaltkonzentrationswert (cS) einstellt.

6. Verfahren nach Anspruch 5, **dadurch gekennzeichnet, dass** der Messzyklus so oft wiederholt wird, bis der untere Umschaltkonzentrationswert (cS) mit dem unteren Umschaltkonzentrationswert des zeitlich unmittelbar davorliegenden Messzyklus übereinstimmt oder um maximal die doppelte Messunsicherheit davon abweicht und gleichzeitig die Differenz zwischen dem oberen Umschaltkonzentrationswert (cA) und dem unteren Umschaltkonzentrationswert (cS) mit der des unmittelbar zeitlich davorliegenden Messzyklus übereinstimmt oder um maximal die doppelte Messunsicherheit abweicht.

7. Verfahren nach einem der Ansprüche 1 bis 6, **dadurch gekennzeichnet, dass** der Messzyklus wiederholt wird, bis die jeweils bestimmte Permeationsrate eines Messzyklus mit der Permeationsrate mindestens eines davorliegenden Messzyklus übereinstimmt oder maximal 20 % davon abweicht.

8. Verfahren nach einem der Ansprüche 1 bis 7, **dadurch gekennzeichnet, dass** die Messkammer (8.7) vor der Durchführung des ersten Messzyklus mindestens einmal durch Öffnen der Absperrelemente (8.1; 8.2) mit dem permeatfreien Spülgasvolumenstrom ($\dot{V}$) vorgespült und anschließend die Messkammer (8.7) durch Schließen der Absperrelemente (8.1; 8.2) wieder geschlossen wird und hinreichend lang geschlossen bleibt, bis in der Messkammer (8.7) ein Gleichgewichtszustand erreicht ist.

9. Verfahren nach einem der Ansprüche 1 bis 8, **dadurch gekennzeichnet, dass** zur Bestimmung der Permeatenkonzentration und/oder der Änderung der Permeatenkonzentration in der Gasphase der Messkammer (8.7) eine nichtinvasive, vorzugsweise optische und/oder kapazitive Messmethode (8.6) eingesetzt wird.

10. Verfahren nach Anspruch 9, **dadurch gekennzeichnet, dass** als Messmethode ein UV-, VIS-, NIR-, MIR-, Quantenkaskadenlaser-, Cavity-Ring-Dow- oder ein Teraherzspektrometer eingesetzt wird.

11. Verfahren nach Anspruch 9, **dadurch gekennzeichnet, dass** ein laserbasiertes Messverfahren, vorzugsweise ein Laserdiodenspektroskopieverfahren eingesetzt wird, das mindestens einen Laserstrahl mit einer jeweils für den/die nachzuweisenden Permeaten abgestimmten Emissionswellenlänge verwendet.

12. Verfahren nach einem der Ansprüche 1 bis 11, **dadurch gekennzeichnet, dass** als Prüfgas kondensierbare Gase und Dämpfe, vorzugsweise Wasserdampf eingesetzt wird/werden.

**Claims**

1. Method for determining the permeation rate of barrier materials,
   wherein in a measuring chamber (8.7) which has at least two shut-off elements (8.1; 8.2) for opening and closing, a concentration of at least one permeate is determined which, present as a test gas with a constant concentration in a test gas chamber (8.3), is permeated into the measuring chamber (8.7) through a barrier element (8.5) which is arranged between the test gas chamber (8.3) and the measuring chamber (8.7) and which has a known permeable surface (A); wherein in a process step (i),
   the measuring chamber (8.7) is purged with a constant permeate-free purge gas volume flow ($\dot{V}$) by opening the shut-off elements (8.1; 8.2) once a predefinable upper switchover concentration (cvA) has been reached in a first measurement variant or once a predefinable enriching time (tvA) has been reached in the second measuring variant;
   wherein the permeate concentration (c) in the open measuring chamber (8.7) drops as a result of the purging; and the time course of this permeate concentration (c) is either determined up to the reaching of a predefinable lower switchover concentration (cvS) in the first measurement variant, with a purge time (tS) being determined in this respect,
   or
   up to the reaching of a predefinable purge time (tvS) in the second measurement variant;
   and
   in a process step (ii),
   on reaching the predefinable lower switchover concentration (cvS) in the first measurement variant or
   on reaching the predefinable purge time (tvS) in the second measurement variant,
   the measuring chamber (8.7) is closed by closing the shut-off elements (8.1; 8.2), wherein the permeate concentration (c) increases in the closed measuring chamber (8.7) as a result of the permeation, with an enriching time (tA) up to the reaching of the predefinable upper switchover concentration (cvA) being determined in the first measurement variant; and subsequently
   using the enriching time (tA) and using the purge time (tS) determined in process step (i) using the first measurement variant and using the course of the permeate concentration (c) determined during the purge time (tS),
   or
   using the course of the permeate concentration (c) determined during the predefinable purge time (tvS) using the second measurement variant in process step (i) and using the predefinable purge time (tvS) and the predefinable enriching time (tvA),
   the permeation rate (P) of the barrier element (8.5) is calculated using the equation

$$P = \frac{\int (c(t) \cdot \dot{V}) \; dt \; \cdot \; M \; \cdot \; p}{R \cdot T \cdot t_{total} \cdot A}$$

   where $t_{total}$ is the sum of the purge time (tS) and of the enriching time (tA) for the first measurement variant and is the sum of the predefinable purge time (tvS) and of the predefinable enriching time (TvA) for the second measurement variant; M is the molar mass of the permeate; p is the maintained pressure, R is the general gas constant; and T is the temperature maintained during process steps (i) and (ii).

2. A method in accordance with claim 1, **characterized in that** the method is carried out starting with process step (i) or with process step (ii).

3. A method in accordance with claim 1 or claim 2, **characterized in that** the permeation rate (P) is respectively determined from at least one measurement cycle respectively comprising at least one process step (i) and at least one process step (ii).

4. A method in accordance with one of the claims 1 to 3, **characterized in that** the measurement cycle is repeated in the first measurement variant until the total cycle time resulting from the sum of the enriching time (tA) and the purge time (tS) coincides with that of the measurement cycle directly before it in time or differs from it by a maximum of twice the measurement uncertainty.

5. A method in accordance with claim 3, **characterized in that** in the second measurement variant, an upper switchover concentration value (cA) is adopted at the end of the predefinable enriching time (tvA) and a lower switchover concentration value (cS) is adopted at the end of the predefinable purge time (tvS).

6. A method in accordance with claim 5, **characterized in that** the measurement cycle is repeated until the lower switchover concentration (cS) coincides with the lower switchover concentration value of the measurement cycle directly before it in time or differs from it by a maximum of twice the measurement uncertainty and simultaneously the difference between the upper switchover concentration value (cA) and the lower switchover concentration value (cS) coincides with that of the measurement cycle directly before it in time or differs from it by a maximum of twice the measurement uncertainty.

7. A method in accordance with one of the claims 1 to 6, **characterized in that** the measurement cycle is repeated until the respective determined permeation rate of a measurement cycle coincides with the permeation rate of at least one preceding measurement cycle or differs from it by a maximum of 20%.

8. A method in accordance with one of the claims 1 to 7, **characterized in that** the measuring chamber (8.7) is prepurged with the permeate-free purge gas volume flow ($\dot{V}$) at least once prior to carrying out the first measurement cycle by opening the shut-off elements (8.1; 8.2) and the measuring chamber (8.7) is subsequently closed again by closing the shut-off elements (8.1; 8.2) and remains closed sufficiently long until a state of equilibrium is reached in the measuring chamber (8.7).

9. A method in accordance with one of the claims 1 to 8, **characterized in that** a non-invasive, preferably optical and/or capacitive measuring method (8.6) is used for determining the permeate concentration and/or the change in the permeate concentration in the gas phase of the measuring chamber (8.7).

10. A method in accordance with claim 9, **characterized in that** a UV, VIS, NIR, MIR, quantum cascade laser spectrometer, a cavity ring-down spectrometer or a terahertz spectrometer is used as the measuring method.

11. A method in accordance with claim 9, **characterized in that** a laser-based measuring process, preferably a laser diode spectroscopy process, is used which uses at least one laser beam having an emission wavelength adapted to the permeate(s) to be detected.

12. A method in accordance with one of the claims 1 to 11, **characterized in that** condensable gases and vapors, preferably water vapor, is/are used as the test gas.

**Revendications**

1. Procédé de détermination du taux de perméation de matériaux barrières,
dans lequel, dans une chambre de mesure (8.7), qui comprend au moins deux éléments d'arrêt (8.1 ; 8.2) pour l'ouverture et la fermeture, une concentration d'au moins un perméat est déterminée, qui, existant en tant que gaz de contrôle dans une chambre de gaz de contrôle (8.3) avec une concentration constante, traverse un élément de barrière (8.5) disposé entre la chambre de gaz de contrôle (8.3) et la chambre de mesure (8.7), qui présente une surface perméable connue (A), vers la chambre de mesure (8.7), de sorte que, dans une étape de procédé (i)
dans une première variante de mesure, à partir d'une concentration de commutation supérieure (cvA) pouvant être prédéterminée, ou dans une deuxième variante de mesure, à partir d'un temps d'enrichissement (tvA) pouvant être prédéterminé, la chambre de mesure (8.7) est rincée par l'ouverture des éléments d'arrêt (8.1 ; 8.2) avec un débit volumique de gaz constant de rinçage sans perméat ($\dot{V}$), la concentration en perméat (c) dans la chambre de mesure (8.7) ouverte diminuant avec le rinçage et
le tracé temporel de cette concentration en perméat (c)
est déterminé, dans la première variante de mesure, jusqu'à ce qu'une concentration de commutation inférieure (cvS) pouvant être prédéterminée soit atteinte, un temps de rinçage (tS) étant alors déterminé,
ou

est déterminé, dans la deuxième variante de mesure, jusqu'à ce qu'un temps de rinçage (tvS) pouvant être prédéterminé soit atteint,
et
dans une étape de procédé (ii)
dans la première variante de mesure, lorsqu'une concentration de commutation inférieure (cvS) pouvant être prédéterminée est atteinte ou
dans la deuxième variante de mesure, lorsqu'un temps de rinçage (tvS) pouvant être prédéterminé est atteint,
la chambre de mesure (8.7) est fermée par la fermeture des éléments d'arrêt (8.1 ; 8.2), la concentration en perméat (c) dans la chambre de mesure (8.7) fermée augmentant du fait de la perméation,
dans la première variante de mesure, un temps d'enrichissement (tA) étant déterminé jusqu'à ce qu'une concentration de commutation inférieure (cvA) pouvant être prédéterminée soit atteinte, puis
avec le temps d'enrichissement (tA) et avec le temps de rinçage (tS), déterminé avec la première variante de mesure dans l'étape de procédé (i), et le tracé de la concentration en perméat (c) déterminé pendant le temps de rinçage (tS),
ou
avec le tracé de la concentration en perméat (c) déterminé avec la deuxième variante de mesure dans l'étape de procédé (i) pendant le temps de rinçage (tvS) pouvant être prédéterminé et avec le temps de rinçage (tvS) pouvant être prédéterminé et le temps d'enrichissement (tvA) pouvant être prédéterminé,
le taux de perméation (P) de l'élément de barrière (8.5) est calculé à l'aide de l'équation :

$$P = \frac{\int (c(t) \cdot \dot{V})\ dt\ \cdot\ M\ \cdot\ p}{R \cdot T \cdot t_{total} \cdot A}$$

$t_{total}$ étant, pour la première variante de mesure, la somme du temps de rinçage (tS) et du temps d'enrichissement (tA) et, pour la deuxième variante de mesure, la somme du temps de rinçage (tvS) pouvant être prédéterminé et du temps d'enrichissement (tvA) pouvant être prédéterminé, c étant la concentration en perméat, M étant la masse molaire du perméat, p étant la pression maintenue, R étant la constante universelle des gaz et T étant la température maintenue pendant les étapes de procédé (i) et (ii).

2. Procédé selon la revendication 1, **caractérisé en ce que** le procédé est effectué en commençant par l'étape de procédé (i) ou par l'étape de procédé (ii).

3. Procédé selon la revendication 1 ou 2, **caractérisé en ce que** le taux de perméation (P) est déterminé à partir d'au moins un cycle de mesure constitué d'au moins une étape de procédé (i) et d'au moins une étape de procédé (ii).

4. Procédé selon l'une des revendications 1 à 3, **caractérisé en ce que**, dans la première variante de mesure, le cycle de mesure est répété jusqu'à ce que le temps de cycle total résultant de la somme du temps d'enrichissement (tA) et du temps de rinçage (tS) coïncide avec celui du cycle de mesure qui le précède immédiatement ou diffère de celui-ci au maximum à hauteur du double de l'incertitude de mesure.

5. Procédé selon la revendication 3, **caractérisé en ce que**, lors de la deuxième variante de mesure, à la fin du temps d'enrichissement (tvA) pouvant être prédéterminé, une valeur de concentration de commutation supérieure (cA) apparaît et, à la fin du temps de rinçage (tvS) pouvant être prédéterminé, une valeur de concentration de commutation inférieure (cS) apparaît.

6. Procédé selon la revendication 5, **caractérisé en ce que** le cycle de mesure est répété jusqu'à ce que la concentration de commutation inférieure (cS) coïncide avec la valeur de concentration de commutation inférieure du cycle de mesure qui précède immédiatement ou diffère de celle-ci au maximum à hauteur du double de l'incertitude de mesure et, en même temps, jusqu'à ce que la différence entre la valeur de concentration de commutation supérieure (cA) et la valeur de concentration de commutation inférieure (cS) coïncide avec celle du cycle de mesure qui précède immédiatement ou diffère de celle-ci au maximum à hauteur du double de l'incertitude de mesure.

7. Procédé selon l'une des revendications 1 à 6, **caractérisé en ce que** le cycle de mesure est répété jusqu'à ce que le taux de perméation déterminé d'un cycle de mesure coïncide avec le taux de perméation d'au moins un cycle de mesure précédent ou diffère de celui-ci à hauteur de 20 % maximum.

8. Procédé selon l'une des revendications 1 à 7, **caractérisé en ce que** la chambre de mesure (8.7) est pré-rincée, avant la réalisation du premier cycle de mesure, au moins une fois par l'ouverture des éléments d'arrêt (8.1 ; 8.2) avec le débit volumique de gaz de rinçage (*V*) puis la chambre de mesure (8.7) est refermée par la fermeture des éléments d'arrêt (8.1 ; 8.2) et reste fermée suffisamment longtemps pour qu'un état d'équilibre soit atteint dans la chambre de mesure (8.7).

9. Procédé selon l'une des revendications 1 à 8, **caractérisé en ce que**, pour la détermination de la concentration en perméat et/ou pour la modification de la concentration en perméat dans la phase gazeuse de la chambre de mesure (8.7), une méthode de mesure (8.6) non invasive, de préférence optique et/ou capacitive, est utilisée.

10. Procédé selon la revendication 9, **caractérisé en ce que** la méthode de mesure utilisée est un spectromètre UV, VIS, NIR, MIR, à laser à cascade quantique, à cavité optique ou térahertz.

11. Procédé selon la revendication 9, **caractérisé en ce qu'**un procédé de mesure basé sur un laser, de préférence un procédé de spectroscopie à diode laser, est utilisé, qui emploie au moins un rayon laser avec une longueur d'onde d'émission adaptée au(x) perméat(s) à mesurer.

12. Procédé selon l'une des revendications 1 à 11, **caractérisé en ce que**, en tant que gaz de contrôle, il est possible d'utiliser des gaz et vapeurs condensables, de préférence de la vapeur d'eau.

Fig. 1a

Fig. 16

Fig. 1c

Fig. 1d

EP 2 781 905 B1

Fig. 2

Fig. 3

**IN DER BESCHREIBUNG AUFGEFÜHRTE DOKUMENTE**

**In der Beschreibung aufgeführte Patentdokumente**

- DE 102007026073 A1

- US 6964191 B1

**In der Beschreibung aufgeführte Nicht-Patentliteratur**

- Guide of the Expression of the Uncertainly in Measurement. GUM

- **WILLFRIED SCHWARZ.** Genauigkeitsmaße richtig interpretieren. *DVW-Schriftreihe,* 2004, vol. 46